# EUROPÄISCHE PATENTSCHRIFT

(11) **EP 3 501 767 B1**
(45) Veröffentlichungstag und Bekanntmachung des Hinweises auf die Patenterteilung: **19.01.2022**
(21) Anmeldenummer: 18214490.7
(22) Anmeldetag: 20.12.2018
(51) Int. Cl.: B27D 5/00, B23Q 3/157, B23Q 5/04

(54) **WECHSELVORRICHTUNG UND VERFAHREN**
CHANGING DEVICE AND METHOD
DISPOSITIF ET PROCÉDÉ DE CHANGEMENT

(30) Priorität: 21.12.2017 DE 102017130891
(43) Veröffentlichungstag der Anmeldung: 26.06.2019
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 2 886 272
- WO-A1-02/14004
- DE-C1- 10 229 775

## Beschreibung

### Technisches Gebiet

Die vorliegende Erfindung bezieht sich auf eine Wechselvorrichtung für ein Mehrstufenwerkzeug gemäß dem Oberbegriff des Patentanspruchs 1. Eine derartige Wechselvorrichtung geht beispielsweise aus der DE 102 29 775 C1 hervor. Ferner bezieht sich die vorliegende Erfindung auf ein Verfahren gemäß dem Oberbegriff des Patentanspruchs 7.

### Stand der Technik

Der Anmelderin ist das Verwenden von Mehrstufenwerkzeugen bekannt. Beispiele für Mehrstufenwerkzeuge sind etwa Mehrprofilfräsköpfe, wie sie in der Holzverarbeitung an einem Aggregat beispielsweise im Durchlaufbetrieb verwendet werden. Ein derartiger Mehrprofilfräskopf kann in drei diskreten Profilpositionen verstellt werden, wobei ein Wechsel zwischen den Profilpositionen beispielsweise mittels einer Druckaufbringung auf einem dafür vorgesehenen Abschnitt des Mehrprofilfräskopfes erfolgt. Dies ermöglicht es beispielsweise in der Holzbearbeitung, lediglich durch einen einzelnen Mehrprofilfräskopf an einem Werkstück mit verschiedenen Radien zu fräsen bzw. eine Fase in das Werkstück einzubringen. Somit kann die Gesamtkomplexität des Aggregats verringert werden. In de WO 02/14004 A1 ist ein Bearbeitungsaggregat für ein Bearbeitungszentrum offenbart. Nachteilig bei den Mehrstufenwerkzeugen im Stand der Technik ist, dass wenn das Bearbeiten von Werkstücken mit mehr als den durch das Mehrstufenwerkzeug bereitgestellten Stufen geschehen soll, dies nicht mit dem Mehrstufenwerkzeug realisierbar ist.

### Darstellung der Erfindung

Der vorliegenden Erfindung lag daher als technisches Problem zugrunde, eine flexiblere Bearbeitung von Werkstücken zu ermöglichen, wobei die Komplexität des zugrunde liegenden Aggregats gering bleibt.

Der Erfindung liegt der Gedanke zugrunde, dass die beschränkten Bearbeitungsmöglichkeiten durch das Mehrstufenwerkzeug im Stand der Technik vor allem dadurch begründet sind, dass in einem Aggregat lediglich ein einzelnes Mehrstufenwerkzeug vorgesehen ist. Aufgrund von Bauraumbeschränkungen ist es jedoch nicht ohne weiteres möglich, ein zweites Mehrstufenwerkzeug an dem Aggregat vorzusehen, da auch etwaige Stützeinrichtungen der Mehrstufenwerkzeuge in diesem Fall in doppelter Ausführung vorgesehen sein müssten.

Der Gegenstand des Anspruchs 1 stellt eine erfindungsgemäße Wechselvorrichtung für ein Mehrstufenwerkzeug bereit. Weitere bevorzugte Ausführungsformen sind in den abhängigen Ansprüchen ausgeführt. Ein Verfahren gemäß der vorliegenden Erfindung ist in Anspruch 7 angegeben.

Die vorliegende Erfindung macht sich diese Erkenntnis zu Nutzen und stellt eine Wechselvorrichtung für ein Mehrstufenwerkzeug bereit, die aufweist: ein Form- und/oder Kraftschlussmittel, das ausgestaltet ist die Wechselvorrichtung mit einer Stützeinrichtung eines Grundaggregats form- und/oder kraftschlüssig zu verbinden, und ein Anbindungsmittel, das ausgestaltet ist die Wechselvorrichtung mit dem Mehrstufenwerkzeug zu verbinden.

Die erfindungsgemäße Wechselvorrichtung ermöglicht die Bearbeitung von Werkstücken mit verschiedenen Mehrstufenwerkzeugen an einem einzelnen Aggregat, wodurch das oben formulierte technische Problem gelöst wird. Insbesondere können somit verschiedene Mehrstufenwerkzeuge an einem Aggregat verwendet werden und somit eine flexiblere Bearbeitung ermöglicht werden, wobei die Komplexität des Aggregats niedrig bleibt, in dem eine Ankopplung verschiedener Mehrstufenwerkzeuge an einer einzelnen Stützeinrichtung ermöglicht wird.

Die Wechselvorrichtung weist zusätzlich eine Übergabeeinrichtung auf, die ausgestaltet ist, Informationen zwischen einem mit der Wechselvorrichtung verbundenen Grundaggregat und einem mit der Wechselvorrichtung verbundenen Mehrstufenwerkzeug zu übergeben.

Durch die Übergabe von Informationen kann auf diese Art ermöglicht werden, das Mehrstufenwerkzeug zu steuern. Dies können somit Antriebsinformationen sein, die beispielsweise eine Drehzahl eines Fräskopfes des Mehrstufenwerkzeuges regulieren, falls das Mehrstufenwerkzeug ein Mehrprofilfräskopf ist.

Weiter bevorzugt werden diese Informationen auf elektrische, hydraulische, pneumatische oder mechanische Art von der Übergabeeinrichtung übergeben werden.

Die Übergabeeinrichtung der Wechselvorrichtung ist ausgestaltet, mittels der Übergabe der

Informationen eine Verstellung der Stufen des Mehrstufenwerkzeugs zu erzeugen.

Es wird somit dem Aggregat ermöglicht, den Einsatz einer bestimmten Stufe des Mehrstufenwerkzeugs zu steuern. Dies ist bezüglich der Automatisierung der Bearbeitungstechnik des Aggregats vorteilhaft.

In einer weiter bevorzugten Ausbildung der vorliegenden Erfindung ist die Wechselvorrichtung ausgestaltet, mit dem Mehrstufenwerkzeug formschlüssig und/oder kraftschlüssig und/oder stoffschlüssig verbunden zu werden.

Durch diese Verbindung kann eine solide Führung der Wechselvorrichtung ermöglicht werden.

Weiterhin offenbart die vorliegende Erfindung ein Aggregat zur Bearbeitung von Werkstücken, das aufweist: eine Wechselvorrichtung wie zuvor dargestellt, ein Mehrstufenwerkzeug, und ein Grundaggregat, das eine Stützeinrichtung aufweist.

Hinsichtlich der Vorteile des Verfahrens wird auf die zuvor in Verbindung mit der Vorrichtung beschriebenen Vorteile verwiesen.

Das Aggregat kann bevorzugt ausgestaltet sein, eine erste Kombination von Wechselvorrichtung und Mehrstufenwerkzeug mit einer zweiten Kombination von Wechselvorrichtung und Mehrstufenwerkzeug auszuwechseln.

Werden durch die Mehrstufenwerkzeuge beispielsweise jeweils 3 Stufen zur Bearbeitung von Werkstücken bereitgestellt, so verdoppelt sich die Anzahl dieser Stufen durch die Verwendung eines zweiten Mehrstufenwerkzeugs. Zwischenzeitlich kann die nicht verwendete Kombination von Wechselvorrichtung und Mehrstufenwerkzeug in einem Lagermittel abgelegt und gelagert sein.

Dementsprechend ist das Mehrstufenwerkzeug der ersten Kombination von Wechselvorrichtung und Mehrstufenwerkzeug unterschiedlich ausgestaltet zu dem Mehrstufenwerkzeug der zweiten Kombination von Wechselvorrichtung und Mehrstufenwerkzeug.

Weiter bevorzugt weist das Verfahren zum Einwechseln einer Kombination eines Mehrstufenwerkzeugs und einer Wechselvorrichtung in einem Aggregat die folgenden Schritte auf: Aufnahme der Kombination eines Mehrstufenwerkzeugs und einer Wechselvorrichtung durch eine Stützeinrichtung des Aggregats, und Schaffen einer form- und/oder kraftschlüssigen Verbindung der Wechselvorrichtung mit einem Grundaggregat des Aggregats.

Das im vorigen dargestellte Verfahren verwendet eine Wechselvorrichtung wie zuvor dargestellt und/oder ein Aggregat wie zuvor dargestellt.

Hinsichtlich der weiteren Vorteile des Verfahrens wird auf die zuvor in Verbindung mit der Vorrichtung beschriebenen Vorteile verwiesen.

### Kurze Beschreibung der Zeichnungen

Fig. 1 ist eine isometrische Ansicht einer bevorzugten Ausführungsform der erfindungsgemäßen Wechselvorrichtung für ein Mehrstufenwerkzeug.
Fig. 2 ist eine isometrische Ansicht einer bevorzugten Ausführungsform der erfindungsgemäßen Wechselvorrichtung mit dem Mehrstufenwerkzeug, die in einem Grundaggregat angeordnet sind.
Fig. 3 ist eine isometrische Ansicht eines Grundaggregats aus

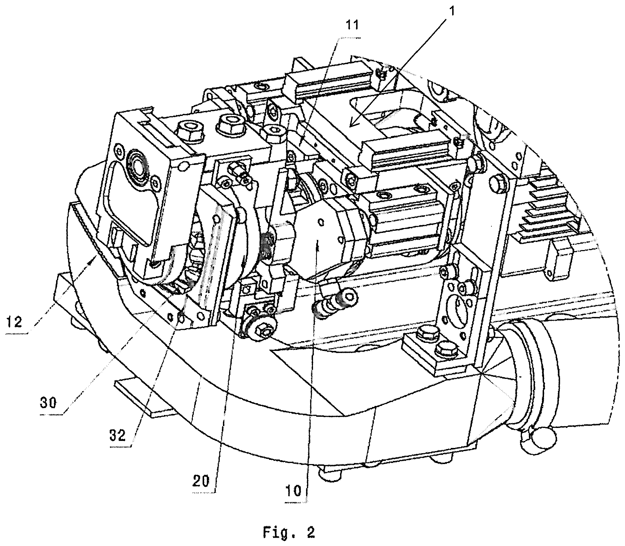

Fig. 2, in dem die bevorzugte Ausführungsform der erfindungsgemäßen Wechselvorrichtung ohne das Mehrstufenwerkzeug angeordnet ist.

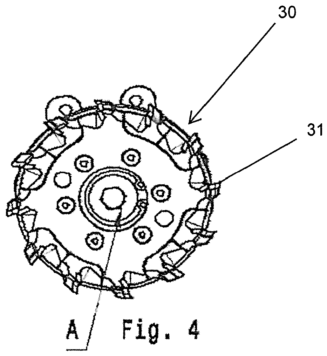

Fig. 4 zeigt eine Draufsicht des Mehrstufenwerkzeugs.

### Detaillierte Beschreibung bevorzugter Ausführungsformen

Im Folgenden werden bevorzugte Ausführungsformen der vorliegenden Erfindung unter Bezugnahme auf die begleitenden Zeichnungen beschrieben.

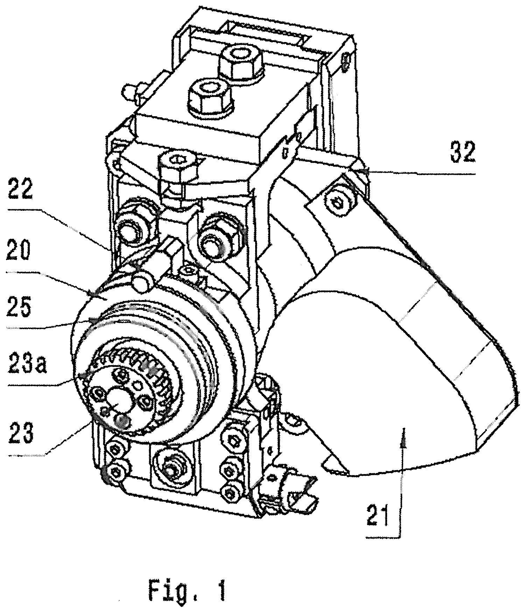

Fig. 1 zeigt eine isometrische Ansicht einer bevorzugten Ausführungsform der erfindungsgemäßen Wechselvorrichtung für ein Mehrstufenwerkzeug.

In einer bevorzugten Ausführungsform ist als zentraler Bestandteil das Mehrstufenwerkzeug 30 vorgesehen, das an der Wechselvorrichtung 20 angeordnet ist und damit verbunden ist. Durch das Aufbringen eines Drucks auf ein nicht dargestelltes Verstellmittel der Wechselvorrichtung können die Stufen des Mehrstufenwerkzeugs 30 verstellt werden. Somit wird eine unterschiedliche Bearbeitung eines Werkstücks ermöglicht.

In einer Ausführungsform ist das Mehrstufenwerkzeug 30 ein Mehrprofilfräskopf. Durch das Aufbringen eines Drucks auf das Verstellmittel können somit verschiedene Profile des Mehrprofilfräskopfes erreicht werden. Insbesondere kann der Schneidenbereich 31 des Mehrprofilfräskopfes in Richtung dessen Rotationsachse verstellt werden, womit ein unterschiedlicher Radius des Schneidenbereichs 31 an einem Werkstück anliegen kann, da der Radius des Schneidenbereichs 31 in der Richtung dessen Rotationsachse zunimmt. Der Schneidenbereich 31 ermöglicht eine spanende Bearbeitung von Werkstücken, die beispielsweise in einem Grundaggregat im Durchlaufbetrieb verwendet werden.

Das Mehrstufenwerkzeug 30 ist mit der Wechselvorrichtung 20 verbunden. Dies wird in der bevorzugten Ausführungsform mittels einer Schraubverbindung A erreicht. Durch diese Schraubverbindung kann eine dauerhafte, haltbare Verbindung zwischen dem Mehrstufenwerkzeug 30 und der Wechselvorrichtung 20 erreicht werden. Andere Beispiele umfassen formschlüssige und/oder kraftschlüssige und/oder stoffschlüssige Verbindungen.

Der Antrieb des Mehrstufenwerkzeugs 30 wird in der in Fig. 1 dargestellten Ausführungsform innerhalb der Wechselvorrichtung 20 mittels einer Antriebsübertragungseinrichtung, in der bevorzugten Ausführungsform eine Welle 23 erreicht, wobei die Welle wiederum von einer Antriebsübergabeeinrichtung 23a von einem Grundaggregat 10 (nicht dargestellt) angetrieben wird. Die Antriebsübertragungseinrichtung ist in dem Fall über ein Zahnrad realisiert, es sind jedoch auch etwa hydraulische Lösungen und/oder elektrische Lösungen möglich.

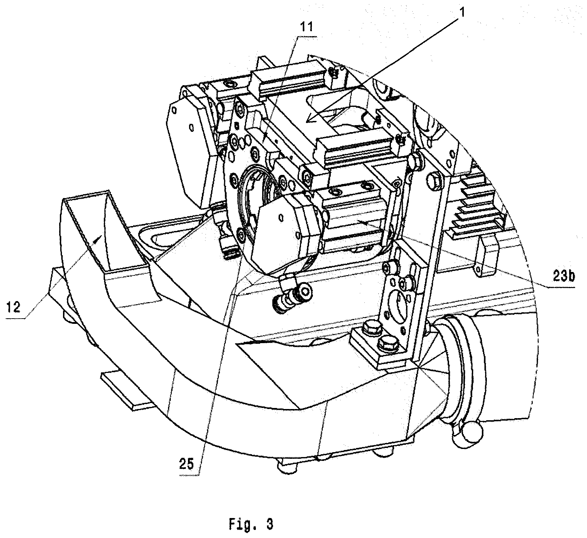

Weiterhin umfasst die Wechselvorrichtung 20 eine Informationsübergabeeinrichtung 23b. Mithilfe der Informationsübergabeeinrichtung 23b können Informationen zwischen einem Grundaggregat und der Wechselvorrichtung übertragen werden, dies bezieht sich insbesondere aber nicht ausschließlich auf die Steuerung des Mehrstufenwerkzeugs 30. Somit können die verschiedenen Stufen des Mehrstufenwerkzeugs 30 aktiviert werden beziehungsweise es kann zwischen diesen verschiedenen Stufen geschaltet werden. In der bevorzugten Ausführungsform (Fig. 3) ist dies über einen pneumatischen Spannzylinder gelöst, der in der Wechselvorrichtung 20 ein Umschalten des Mehrstufenwerkzeugs 30 ermöglicht.

Die Wechselvorrichtung 20 ist weiterhin ausgestaltet, eine genaue passende Verbindung mit einem Grundaggregat einzugehen. Hierfür ist das Zentrierungsmittel 22 vorgesehen, das in Verbindung mit einem Grundaggregat kommen kann und in der bevorzugten Ausführungsform ein Zentrierstift ist.

Zum Verbinden der Wechselvorrichtung 20 mit einem Grundaggregat ist ein Form- und/oder Kraftschlussmittel 25 vorgesehen. Dies ermöglicht das lösbare Verbinden der Wechselvorrichtung 20 und einem Grundaggregat, wobei das Form- und/oder Kraftschlussmittel 25 etwa eine Einspanneinrichtung sein kann. Bevorzugt ist, dass das Form-und/oder Kraftschlussmittel 25 eine form- und/oder kraftschlüssige Verbindung ermöglicht, die eine automatisierte und/oder manuelle Trennung des Fräskopfes vom Grundaggregat ermöglicht.

Bei der Bearbeitung von Werkstücken mittels des Schneidenbereichs 31 des Mehrstufenwerkzeugs 30 kann es zu Abrieb des Werkstücks kommen. Im Fall einer Holzbearbeitung ist dieser Abrieb in Form von Holz- und/oder Kunststoffspänen, die über eine Absaugverbindung 21 an ein Grundaggregat abgeführt werden können. Hierbei ist es möglich, dass die Absaugverbindung 21 ein aktives Absaugen von Abrieb bewirkt, oder dass alternativ das aktive Absaugen in einem angeschlossenen Grundaggregat stattfindet und Absaugverbindung 21 den somit entstandenen Unterdruck lediglich zum Werkstück weiterleitet.

Fig. 2 ist eine isometrische Ansicht einer bevorzugten Ausführungsform der erfindungsgemäßen Wechselvorrichtung mit dem Mehrstufenwerkzeug, die in einem Grundaggregat angeordnet sind.

Fig. 3 ist eine isometrische Ansicht eines Grundaggregats aus Fig. 2, in dem die bevorzugte Ausführungsform der erfindungsgemäßen Wechselvorrichtung ohne das Mehrstufenwerkzeug angeordnet ist.

Diese beiden Zeichnungen stellen eine Verwendung der im vorigen beschriebenen Kombination von Wechselvorrichtung 20 und Mehrstufenwerkzeug 30 an einem Grundaggregat 10 dar. Zusammen bilden diese Komponenten das Aggregat 1.

Wie in Fig. 2 und Fig. 3 zu erkennen ist, so weist das Grundaggregat 10 eine Stützeinrichtung 11 auf. Diese Stützeinrichtung 11 ist ausgestaltet, die Kombination von Wechselvorrichtung 20 und Mehrstufenwerkzeug 30 aufzunehmen, das heißt, über die Stützeinrichtung 11 das Grundaggregat 10 mit der Kombination von Wechselvorrichtung 20 und Mehrstufenwerkzeug 30 zu verbinden.

Weiterhin weist das Grundaggregat 10 eine Absaugeinrichtung 12 auf. Diese Absaugeinrichtung 12 ist ausgestaltet, mit der im vorigen dargestellten Absaugverbindung 21 verbunden zu werden, um somit Abtransport von Abrieb sicherzustellen.

In Fig. 2 und Fig. 3 ist das Einwechseln einer Kombination eines Mehrstufenwerkzeugs 30 und einer Wechselvorrichtung 20 an dem Aggregat 1 dargestellt.

Dies kann wahlweise automatisch oder manuell geschehen, in der hier dargestellten bevorzugten Ausführungsform ist das automatische Einwechseln aus einem nicht dargestellten Werkzeughalter vorgesehen. Zum Start des Einwechselvorgangs wird die Stützeinrichtung 11 an den Werkzeughalter verfahren. Anschließend wird eine kraft- und/oder formschlüssige Verbindung zwischen der Stützeinrichtung 11 und der Wechselvorrichtung 20 geschaffen, die, wie oben dargestellt, in der hier dargestellten bevorzugten Ausführungsform mittels eines pneumatischen Spannzylinders erreicht werden kann. Dabei wird die genaue Ausrichtung der Kombination von Wechselvorrichtung 20 und Mehrstufenwerkzeug 30 gegenüber der Stützeinrichtung 11 des Grundaggregats 10 mittels des Zentrierungsmittels 22 erreicht. Auch die Antriebsübergabeeinrichtung 23a und die Informationsübergabeeinrichtung 23b werden an dem Grundaggregat verbunden, um dem Mehrstufenwerkzeug 30 Energie bereitzustellen und um dieses zu steuern.

Bei Bedarf kann dieser Vorgang in entgegengesetzter Reihenfolge wiederholt werden, wodurch anschließend eine neue Kombination von Wechselvorrichtung 20 und Mehrstufenwerkzeug 30 mit dem Grundaggregat 10 verbunden werden kann, wobei diese neue Kombination von Wechselvorrichtung 20 und Mehrstufenwerkzeug 30 dann bevorzugt ein unterschiedliches Mehrstufenwerkzeug aufweist.

Fig. 4 ist eine Frontansicht des Mehrstufenwerkzeugs 30. In dieser Ansicht ist dargestellt, dass das Mehrstufenwerkzeug 30 mittels einer Schraubverbindung A mit der hier nicht dargestellten Wechselvorrichtung 20 verbunden ist, um so eine dauerhafte, haltbare Verbindung dazwischen herzustellen. Weiterhin ist der Schneidenbereich 31 des Mehrstufenwerkzeugs 30 dargestellt.

### Bezugszeichenliste

- 1: Aggregat
- 10: Grundaggregat
- 11: Stützeinrichtung
- 12: Absaugeinrichtung
- 20: Wechselvorrichtung
- 21: Absaugverbindung
- 22: Zentrierungsmittel
- 23: Welle
- 23a: Antriebsübergabeeinrichtung
- 23b: Informationsübergabeeinrichtung
- 24: Anbindungsmittel
- 25: Form- und/oder Kraftschlussmittel
- 30: Mehrstufenwerkzeug
- 31: Schneidenbereich
- 32: Seitentastung
- A: Schraubverbindung

## Patentansprüche

1. Wechselvorrichtung (20) für ein Mehrstufenwerkzeug (30), aufweisend:
ein Form- und/oder Kraftschlussmittel (25), das ausgestaltet ist die Wechselvorrichtung (20) mit einer Stützeinrichtung eines Grundaggregats (10) form- und/oder kraftschlüssig zu verbinden, und
ein Anbindungsmittel (24, A), das ausgestaltet ist die Wechselvorrichtung (20) mit dem Mehrstufenwerkzeug (30) zu verbinden,
**dadurch gekennzeichnet, dass** die Wechselvorrichtung (20) eine Übergabeeinrichtung (23a, 23b) aufweist, die ausgestaltet ist, Informationen und/oder Energie zwischen einem mit der Wechselvorrichtung (20) verbundenen Grundaggregat (10) und einem mit der Wechselvorrichtung (20) verbundenen Mehrstufenwerkzeug (30) zu übergeben,
wobei die Übergabeeinrichtung (23a, 23b) ausgestaltet ist, mittels der Übergabe der Informationen eine Verstellung der Stufen des Mehrstufenwerkzeugs (30) zu erzeugen.

2. Wechselvorrichtung (20) nach Anspruch 1, wobei
die Informationen und/oder Energie auf elektrische, hydraulische, pneumatische oder mechanische Art von der Übergabeeinrichtung (23a, 23b) übergeben werden.

3. Wechselvorrichtung (20) nach einem der Ansprüche 1 oder 2, wobei
die Wechselvorrichtung (20) ausgestaltet ist, mit dem Mehrstufenwerkzeug (30) formschlüssig und/oder kraftschlüssig und/oder stoffschlüssig über das Anbindungsmittel (24) verbunden zu werden.

4. Aggregat (1) zur Bearbeitung von Werkstücken, aufweisend:
eine Wechselvorrichtung (20) nach einem der Ansprüche 1 bis 3,
ein Mehrstufenwerkzeug (30), und
ein Grundaggregat (10), das eine Stützeinrichtung (11) aufweist.

5. Aggregat (1) nach Anspruch 4,
wobei das Aggregat (1) ausgestaltet ist, eine erste Kombination von Wechselvorrichtung (20) und Mehrstufenwerkzeug (30) mit einer zweiten Kombination von Wechselvorrichtung (20) und Mehrstufenwerkzeug (30) auszuwechseln.

6. Aggregat (1) nach Anspruch 5,
wobei das Mehrstufenwerkzeug (30) der ersten Kombination von Wechselvorrichtung (20) und Mehrstufenwerkzeug (30) unterschiedlich ausgestaltet ist zu dem Mehrstufenwerkzeug (30) der zweiten Kombination von Wechselvorrichtung (20) und Mehrstufenwerkzeug (30).

7. Verfahren zum Einwechseln einer Kombination eines Mehrstufenwerkzeugs (30) und einer Wechselvorrichtung (20) in einem Aggregat (1), wobei das Verfahren die folgenden Schritte aufweist:
Aufnahme der Kombination eines Mehrstufenwerkzeugs (30) und einer Wechselvorrichtung (20) durch eine Stützeinrichtung (11) des Aggregats (1) und
form- und/oder kraftschlüssige Verbindung der Wechselvorrichtung (20) mit einem Grundaggregat (10) des Aggregats (1),
**dadurch gekennzeichnet, dass** die Wechselvorrichtung (20) eine Wechselvorrichtung (20) nach einem der Ansprüche 1 bis 3 ist und/oder
das Aggregat (1) ein Aggregat (1) nach einem der Ansprüche 4 bis 6 ist.

## Claims

1. Changing device (20) for a multiple stage tool (30), having:
a form-locking and/or force-locking means (25) which is designed to connect the changing device (20) with a support device of a base unit (10) in a form-locking and/or force-locking manner, and
a connection means (24, A) which is designed to connect the changing device (20) with the multiple stage tool (30),
**characterised in that** the changing device (20) has a transfer device (23a, 23b) which is designed to transfer information and/or energy between a base unit (10) connected to the changing device (20) and a multiple stage tool (30) connected to the changing device (20),
wherein the transfer device (23a, 23b) is designed to effect an adjustment of the stages of the multiple stage tool (30) by means of the transfer of the information.

2. Changing device (20) according to claim 1,
wherein
the information and/or energy are transferred from the transfer device (23a, 23b) in an electrical, hydraulic, pneumatic or mechanical manner.

3. Changing device (20) according to one of the claims 1 or 2, wherein
the changing device (20) is designed to be connected to the multiple stage tool (30) in a form-locking and/or force-locking manner and/or in a substance-bonded manner via the connection means (24).

4. Unit (1) for machining workpieces, having:
a changing device (20) according to one of the claims 1 to 3,
a multiple stage tool (30), and
a base unit (10) that has a support device (11).

5. Unit (1) according to claim 4,
wherein the unit (1) is designed to replace a first combination of changing device (20) and multiple stage tool (30) with a second combination of changing device (20) and multiple stage tool (30).

6. Unit (1) according to claim 5,
wherein the multiple stage tool (30) of the first combination of changing device (20) and multiple stage tool (30) is designed differently to the multiple stage tool (30) of the second combination of changing device (20) and multiple stage tool (30).

7. Method for exchanging a combination of a multiple stage tool (30) and a changing device (20) in a unit (1), wherein the method has the following steps:
receiving of the combination of a multiple stage tool (30) and a changing device (20) by a support device (11) of the unit (1) and
form-locking and/or force-locking connection of the changing device (20) to a base unit (10) of the unit (1),
**characterised in that** the changing device (20) is a changing device (20) according to one of the claims 1 to 3 and/or
the unit (1) is a unit (1) according to one of the claims 4 to 6.

## Revendications

1. Dispositif de changement (20) pour un outil à plusieurs étages (30), présentant :
un moyen d'accouplement et/ou d'adhérence (25) qui est conçu pour raccorder par accouplement et/ou adhérence le dispositif de changement (20) à un système de support d'un agrégat de base (10), et
un moyen de liaison (24, A) qui est conçu pour raccorder le dispositif de changement (20) à l'outil à plusieurs étages (30),
**caractérisé en ce que** le dispositif de changement (20) présente un système de transfert (23a, 23b) qui est conçu pour transférer des informations et/ou de l'énergie entre un agrégat de base (10) raccordé au dispositif de changement (20) et un outil à plusieurs étages (30) raccordé au dispositif de changement (20),
dans lequel le système de transfert (23a, 23b) est conçu pour produire, au moyen du transfert des informations, un réglage des étages de l'outil à plusieurs étages (30).

2. Dispositif de changement (20) selon la revendication 1, dans lequel
les informations et/ou l'énergie sont transférées par le système de transfert (23a, 23b) de manière électrique, hydraulique, pneumatique ou mécanique.

3. Dispositif de changement (20) selon l'une quelconque des revendications 1 ou 2, dans lequel
le dispositif de changement (20) est conçu pour être raccordé à l'outil à plusieurs étages (30) par accouplement et/ou adhérence et/ou par complémentarité de matière via le moyen de liaison (24).

4. Agrégat (1) destiné à usiner des pièces, présentant :
un dispositif de changement (20) selon l'une quelconque des revendications 1 à 3,
un outil à plusieurs étages (30), et
un groupe de base (10) qui présente un système de support (11).

5. Agrégat (1) selon la revendication 4,
dans lequel l'agrégat (1) est conçu pour remplacer une première combinaison du dispositif de changement (20) et de l'outil à plusieurs étages (30) par une seconde combinaison du dispositif de changement (20) et de l'outil à plusieurs étages (30).

6. Agrégat (1) selon la revendication 5,
dans lequel l'outil à plusieurs étages (30) de la première combinaison du dispositif de changement (20) et de l'outil à plusieurs étages (30) est conçu différemment par rapport à l'outil à plusieurs étages (30) de la seconde combinaison du dispositif de changement (20) et de l'outil à plusieurs étages (30).

7. Procédé d'installation d'une combinaison d'un outil à plusieurs étages (30) et d'un dispositif de changement (20) dans un agrégat (1), dans lequel le procédé comprend les étapes suivantes :
réception de la combinaison d'un outil à plusieurs étages (30) et d'un dispositif de changement (20) par un système de support (11) de l'agrégat (1) et
raccordement par accouplement et/ou adhérence du dispositif de changement (20) à un agrégat de base (10) de l'agrégat (1),
**caractérisé en ce que**
le dispositif de changement (20) est un dispositif de changement (20) selon l'une quelconque des revendications 1 à 3 et/ou l'agrégat (1) est un groupe (1) selon l'une quelconque des revendications 4 à 6.
